(19) **Europäisches Patentamt**
**European Patent Office**
**Office européen des brevets**

(11) **EP 2 639 436 B1**

(12) **EUROPÄISCHE PATENTSCHRIFT**

(45) Veröffentlichungstag und Bekanntmachung des Hinweises auf die Patenterteilung:
**24.07.2019 Patentblatt 2019/30**

(21) Anmeldenummer: **13000890.7**

(22) Anmeldetag: **22.02.2013**

(51) Int Cl.:
*F02D 41/14* *(2006.01)*　　*F02D 41/24* *(2006.01)*
*G08C 15/00* *(2006.01)*　　*G06F 17/00* *(2019.01)*
*H04L 12/775* *(2013.01)*　　*F02D 45/00* *(2006.01)*
*H04Q 9/00* *(2006.01)*

(54) **VERFAHREN ZUR OPTIMIERUNG EINER BRENNKRAFTMASCHINE**

METHOD FOR OPTIMISING A COMBUSTION MACHINE

PROCÉDÉ D'OPTIMISATION D'UN MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2012 DE 102012005197**

(43) Veröffentlichungstag der Anmeldung:
**18.09.2013 Patentblatt 2013/38**

(73) Patentinhaber: **IAV GmbH Ingenieurgesellschaft Auto und Verkehr**
**10587 Berlin (DE)**

(72) Erfinder: **Sven, Meyer**
**D-38518 Gifhorn (DE)**

(56) Entgegenhaltungen:
**FR-A1- 2 901 576　　GB-A- 2 161 960**

- **Matthias Hübner: "Modellbildung und Regelung eines kooperativen Straßenverkehrs mittels Petrinetzen und Konsens-Algorithmen", , 25. April 2012 (2012-04-25), Seiten 1-258, XP055488794, Gefunden im Internet: URL:http://rzbl04.biblio.etc.tu-bs.de:8080 /docportal/servlets/MCRFileNodeServlet/Doc Portal_derivate_00023132/Dissertation-Hueb ner.pdf [gefunden am 2018-06-28]**

**Beschreibung**

Die vorliegende Erfindung betrifft ein Verfahren zur Optimierung einer Brennkraftmaschine mit den Merkmalen des Patentanspruches 1.

Zur Steuerung bzw. Regelung weisen Brennkraftmaschinen eine Vielzahl von Sensoren und Aktoren auf, die mit einem Steuergerät zusammenwirken. Im Rahmen der Entwicklung von Brennkraftmaschinen ist es vorbekannt, dieses Zusammenwirken derart zu optimieren, dass die Sensoren die tatsächlichen physikalischen Größen erfassen und mittels der Aktoren mit einer für den sicheren und effizienten Betrieb der Brennkraftmaschine notwendigen Genauigkeit eingestellt werden. Dieses so gebildete mechatronische Gesamtsystem kann in Teilsysteme zerlegt werden. Ein erstes Teilsystem betrifft zum Beispiel die Erfassung des Anteils an Frischluft, welcher der Brennkraftmaschine zufließt. Ein weiteres Teilsystem betrifft zum Beispiel die geregelte Einstellung des Anteils an Frischluft, welcher der Brennkraftmaschine zufließt. Ein noch weiteres Teilsystem betrifft zum Beispiel die geregelte Einstellung eines bestimmten Verbrennungsluftverhältnisses. Die einzelnen mechatronischen Teilsysteme sind stark voneinander abhängig. Zum Beispiel ist die Erfassung des Anteils an Frischluft, welcher der Brennkraftmaschine zufließt, von grundlegender Bedeutung für das weitere Teilsystem der Einstellung dieses Anteils mittels einer Drosselklappe oder mittels eines variablen Ventilhubes der Brennkraftmaschine. Diese Abhängigkeit wird auch bei der Optimierung, bezeichnet auch als Applikation, als Kalibrierung oder einfach als "Anpassung" der Brennkraftmaschine, während der Entwicklung der Brennkraftmaschine deutlich. D. h. der Prozess der Anpassung der Sensorik zur Erfassung des Anteils an Frischluft, welcher der Brennkraftmaschine zufließt, z. B. mittels eines Luftmassenmessers, muss derart genau sein, dass der Prozess der Anpassung der Aktorik zur Einstellung des Anteils an Frischluft, welcher der Brennkraftmaschine zufließt, sicher und effizient durchgeführt werden kann. Gegenwärtig wird hierzu von einer Bedienperson ein Anpassungsprozess nach dem anderen durchgeführt, wobei wenn ein bestimmter Reifegrad der Anpassung eines einzelnen Teilsystems erreicht ist, ein weiterer oder mehrere weitere Anpassungsprozesse begonnen werden. Die dabei gewonnenen Datensatzfragmente werden dann von der Bedienperson auf ihre Plausibilität geprüft und in einen übergeordneten Datensatz einarbeitet.

Gemäß dem Dokument FR2901576A1 umfasst ein Verfahren zum Betreiben einer Brennkraftmaschine das Bestimmen eines Arbeitspunkts und das Modellieren einer homogenen Verbrennung für einen Punkt durch chemische kinetische Untermodelle eines Modellierungsmoduls, wenn eine Temperatur jeweils niedriger/höher als eine kritische Temperatur ist.

Gemäß dem Dokument GB2161960A ist ein Verfahren zum Steuern und Regeln eines Kraftfahrzeugmotors Stand der Technik, wobei zwei Matrizen vorgesehen sind, von denen jede durch zwei Variablen des Motorbetriebs gebildet und versetzt auf der X-Achse um einen vorbestimmten Wert angeordnet ist.

Gemäß Hübner, M.: Modellbildung und Regelung eines kooperativen Straßenverkehrs mittels Petrinetzen und Konsens-Algorithmen. Dissertation, Technische Universität Braunschweig, 2012 ist weiterhin eine Konzeption eines zukünftigen automatisierten Straßenverkehrs für Autobahnen auf Basis von fahrzeuglokalen Entscheidungsmechanismen und Fahrzeug-Fahrzeug-Kommunikation Stand der Technik.

Gemäß der DE102004013205A1 ist es vorbekannt, die Anpassungsprozesse der mechatronischen Teilsysteme einer Brennkraftmaschine zu automatisieren. Dabei wird in einer Planungsebene ein Anpassungsprozess grafisch modelliert und in einer Durchführungsebene unter Verwendung einer Software zur Messung und Einstellung von Kenngrößen einer Brennkraftmaschine abgearbeitet. D. h. mittels dieses Verfahrens ist es lediglich möglich, die einzelnen Anpassungsprozesse zu automatisieren. Es ist daher Aufgabe der vorliegenden Erfindung, eine Möglichkeit zu schaffen, die Optimierung einer Brennkraftmaschine noch effizienter und sicherer zu gestalten.

Diese Aufgabe wird erfindungsgemäß dadurch gelöst, dass die für ein optimales Zusammenwirken von Sensoren, Aktoren, Steuergerät und Brennkraftmaschine durchzuführenden einzelnen Anpassungsprozesse in Abhängigkeit der jeweils erreichten Güte der einzelnen Anpassungsprozesse untereinander, der Umgebungsbedingungen der Brennkraftmaschine und der Systemzustände der Brennkraftmaschine in Verbindung mit einem Steuerprogramm gestartet und durchgeführt werden. Somit werden erfindungsgemäß die Wechselwirkungen zwischen den einzelnen Anpassungsprozessen der jeweiligen mechatronischen Teilsysteme hinsichtlich ihrer Güte bzw. der Sensorik und Aktorik im Zusammenwirken mit dem Steuergerät und der Brennkraftmaschine berücksichtigt, so dass ein Gesamtkonzept vorliegt, das die einzelnen Anpassungsprozesse mittels eines Steuerprogramms überwacht, startet, bewertet, priorisiert und durchführt. Dieses Gesamtkonzept wird erfindungsgemäß durch die Einbeziehung der Umgebungsbedingungen, wie dem Umgebungsluftdruck und/oder -temperatur verfeinert, so dass insbesondere nur dann Anpassungsprozesse gestartet und durchgeführt werden, wenn dafür geeignete Umgebungsbedingungen der Brennkraftmaschine vorliegen.

Das betrifft auch die Einbeziehung des Systemzustands der Brennkraftmaschine, repräsentiert durch Betriebspunktparameter, d. h. insbesondere der aktuellen Last und Drehzahl der Brennkraftmaschine, die in dem gerade gefahrenen Betriebspunkt vorliegen oder anderen relevanten Größen wie der Kühlmitteltemperatur der Brennkraftmaschine, so dass erfindungsgemäß vorteilhaft nur dann Anpassungsprozesse gestartet und durchgeführt werden, wenn die Brennkraftmaschine in dafür geeigneten Betriebspunkten betrieben wird. Das erfindungsgemäße Verfahren kann nicht nur im Rahmen einer Optimierung der Brennkraftmaschine an einem Prüfstand durchgeführt werden, sondern auch im Fahrzeug, so dass einerseits Anpassungsarbeiten in Abhängigkeit der jeweils erreichten Güte der einzelnen Anpassungsprozesse untereinander, der Umgebungsbedingungen der Brennkraftmaschine und der Betriebspunktparameter der Brennkraftmaschine gestartet und durchgeführt werden, wobei auch Validierungen vorgenommen werden können, um den Projektfortschritt zu analysieren und zu dokumentieren. Das erfindungsgemäße Verfahren kann in Verbindung mit externen Soft- und Hardware-Werkzeugen, die in Wechselwirkung mit dem Steuergerät der Brennkraftmaschine stehen, ausgeführt werden oder aber direkt in der im Steuergerät der Brennkraftmaschine enthaltenen Software zur Steuerung und/oder Regelung der Brennkraftmaschine implementiert sein, so dass während der Entwicklung einer Brennkraftmaschine bzw. eines Fahrzeuges, eine Selbstkalibrierung des mechatronischen Gesamtsystems unter Berücksichtigung der erfindungsgemäßen Verfahrensabhängigkeiten durchgeführt werden kann. Von besonderem Vorteil ist es, dass durch die erfindungsgemäße Berücksichtigung der jeweils erreichten Güte der einzelnen Anpassungsprozesse untereinander, der Umgebungsbedingungen der Brennkraftmaschine und der Betriebspunktparameter der Brennkraftmaschine bei der Frage, ob ein Anpassungsprozess gestartet und durchgeführt werden soll oder nicht, unnötige Aufzeichnungen von Messdaten vermieden werden, da stets nur der Anpassungsprozess mit einer damit verbundenen Messdatenerfassung und -auswertung gestartet und durchgeführt wird, wenn dieser Anpassungsprozess auch mit einer bestimmten Sicherheit und Effizienz abgeschlossen werden kann. Erfindungsgemäß kann die Berücksichtigung der jeweils erreichten Güte der einzelnen Anpassungsprozesse untereinander, der Umgebungsbedingungen der Brennkraftmaschine und der Betriebspunktparameter der Brennkraftmaschine bei der Frage, ob ein Anpassungsprozess gestartet und durchgeführt werden soll oder nicht, in Form einer insbesondere von einer fachkundigen Bedienperson erstellten Bedingung ausgeführt sein, insbesondere als Programmcode, wobei mittels dieser vorgegebenen Bedingung die Informationen über die Güte der einzelnen Anpassungsprozesse untereinander, der Umgebungsbedingungen der Brennkraftmaschine und der Betriebspunktparameter der Brennkraftmaschine wiederkehrend verarbeitet werden, so dass zu bestimmten Zeitpunkten immer wieder bestimmt werden kann, ob weitere Anpassungsprozesse gestartet werden können bzw. die dafür erforderlichen Bedingungen vorliegen. Erfindungsgemäß kann die Berücksichtigung der Abhängigkeiten der Güte der einzelnen Anpassungsprozesse untereinander, der Umgebungsbedingungen der Brennkraftmaschine und der Betriebspunktparameter der Brennkraftmaschine als Ordnungsrelation einer Prozessmenge angesehen werden, welche die Ausführungsreihenfolge der Prozesse definiert. D. h. das erfindungsgemäße Verfahren kann in Form von gerichteten abhängigen Graphen dargestellt und beschrieben werden, wobei dabei die Reihenfolgebeziehungen der Prozesse sowie deren Interaktion modelliert werden. Hierbei wird insbesondere jeder Anpassungsprozess in Form eines Knotens repräsentiert und die Abhängigkeiten der Anpassungsprozesse hinsichtlich der jeweils erreichten Güte werden untereinander durch gerichtete Graphen, d. h. Kanten dargestellt. Zweckmäßig für diese Ausführung der vorliegenden Erfindung ist eine Beschreibung der Abhängigkeiten der Gütewerte der Anpassungsprozesse mittels einer Adjazenzmatrix, so dass eine Implementierung des erfindungsgemäßen Verfahrens in einen Softwarerahmen einfach und effizient möglich ist. Im Wesentlichen wird das erfindungsgemäße Verfahren mittels einer Adjazenzmatrix im Rahmen eines Steuerprogramms durch insgesamt drei Teilmatrizen beschrieben, nämlich eine Anpassungsprozess-Gütematrix, eine Brennkraftmaschinen-Systemzustandsmatrix und eine Brennkraftmaschinen-Umweltzustandsmatrix, wobei durch eine Multiplikation dieser Teilmatrizen eine gesamthafte Matrix gebildet wird. Diese Matrix beschreibt dann vollständig die erfindungsgemäß berücksichtigten Abhängigkeiten für einen planmäßigen und effizienten Ablauf der einzelnen Anpassungsprozesse untereinander und in Abhängigkeit des Systemzustands sowie des Umweltzustandes und erlaubt somit gesamthaft eine Optimierung des mechatronischen Gesamtsystems, bestehend aus Brennkraftmaschine, den Sensoren und Aktoren, dem Steuergerät und den dort abgebildeten funktionalen Zusammenhängen zu Steuerung und/oder Regelung der Brennkraftmaschine.

Weitere vorteilhafte Ausgestaltungen sind in den abhängigen Patentansprüchen enthalten und werden in dem folgenden Ausführungsbeispiel näher beschrieben.

Hierbei zeigen:

Fig. 1:     eine schematische Darstellung einer Brennkraftmaschine,
Fig. 2:     ein Flussdiagramm des erfindungsgemäßen Verfahrens.

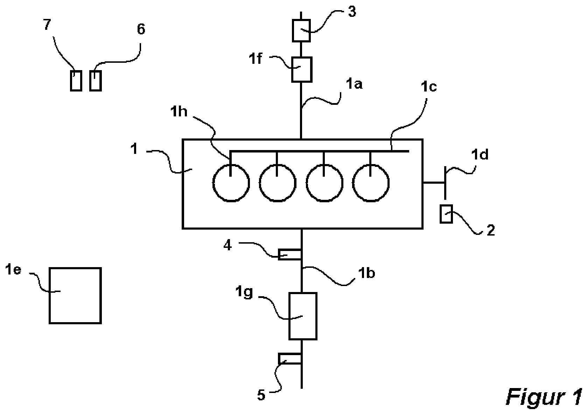

Wie in Figur 1 gezeigt, umfasst eine Brennkraftmaschine 1 eine Ansauganlage 1a, eine Abgasanlage 1b, eine Kraftstoffversorgungsanlage 1c, eine Kurbelwelle 1d und ein Steuergerät 1e. In der Ansauganlage 1a ist ein Drosselorgan 1f angeordnet, so dass mittels dieses Aktors der Anteil an Frischluft eingestellt werden kann, welcher der Brennkraftmaschine 1 zufließt. In der Abgasanlage 1b ist zur Reinigung der Abgase der Brennkraftmaschine 1 ein Katalysator 1g angeordnet. Mittels Injektoren 1h als Aktoren wird der Brennkraftmaschine 1 Kraftstoff zugeführt. Zur Erfassung der Drehzahl der Kurbelwelle 1d ist ein erster Sensor 2 vorgesehen, der z. B. gemäß dem induktiven Prinzip arbeitet und die auf einem Geberrad angeordneten Zähne abtastet. Zur Erfassung des Anteils an Frischluft, welcher der Brennkraftmaschine 1 zufließt, ist ein zweiter Sensor 3 vorgesehen, der zum Beispiel als Heißfilmluftmassenmesser ausgeführt ist und der in der Ansauganlage 1a stromaufwärts des Drosselorgans 1f angeordnet ist. Zur Erfassung des Anteils an Restsauerstoff im Abgas der Brennkraftmaschine 1 ist ein dritter Sensor 4 vorgesehen, der stromauf des Katalysators 1g angeordnet ist. Zum Zweck der Bestimmung der Wirksamkeit des Katalysators 1g ist weiterhin stromab des Katalysators 1g ein vierter Sensor 5 angeordnet. Darüber hinaus sind ein fünfter Sensor 6 zur Erfassung der Umgebungstemperatur und ein sechster Sensor 7 zur Erfassung des Umgebungsdruckes vorgesehen. Alle genannten Sensoren und Aktoren sind mit dem Steuergerät 1e verbunden, so dass ein mechatronisches Gesamtsystem gebildet wird. Dieses Gesamtsystem kann in Teilsysteme zerlegt werden.

Ein erstes Teilsystem ist zum Beispiel die Ansauganlage 1a mit dem Drosselorgan 1f und dem zweiten Sensor 3 zur Erfassung des Anteils an Frischluft, welcher der Brennkraftmaschine 1 zufließt. Innerhalb dieses ersten Teilsystems wird ein Regelkreis gebildet, indem mittels des zweiten Sensors 3 ein Istwert für den Anteil an Frischluft ermittelt wird, welcher der Brennkraftmaschine 1 zufließt, der mit einem Sollwert verglichen wird und in Abhängigkeit einer Abweichung zwischen Soll- und Istwert mittels des Drosselorgans 1f der Anteil an Frischluft eingestellt wird, welcher der Brennkraftmaschine 1 zufließt.

Ein zweites Teilsystem ist zum Beispiel die Abgasanlage 1b mit dem Katalysator 1g, dem dritten Sensor 4, dem vierten Sensor 5 sowie der Kraftstoffversorgungsanlage 1c mit den Injektoren 1h. Innerhalb dieses zweiten Teilsystems wird ebenfalls ein Regelkreis gebildet, indem mittels des dritten Sensors 4, der stromauf des Katalysators 1g angeordnet ist, ein Istwert für den Anteil an Restsauerstoff im Abgas bestimmt wird, der mit einem Sollwert verglichen wird, wobei in Abhängigkeit einer Abweichung zwischen Soll- und Istwert mittels der Injektoren 1h der Anteil an Kraftstoff eingestellt wird, welcher der Brennkraftmaschine 1 zugeführt wird.

Ferner wird innerhalb des zweiten Teilsystems eine Diagnosefunktion zur Bestimmung der Wirksamkeit des Katalysators 1g ausgeführt, wobei in Abhängigkeit von Vorgabewerten mittels der Injektoren 1h bei einem konstanten Anteil an Frischluft, welcher der Brennkraftmaschine 1 zufließt, der Anteil an Kraftstoff über einen bestimmten Zeitraum verändert wird, so dass sich das Verbrennungsluftverhältnis verändert und z. B. die Sauerstoffspeicherfähigkeit des Katalysators 1g mittels des dritten Sensors 4 und des vierten Sensors 5 analysiert wird, wie dem Fachmann allgemein bekannt ist. Bei der Entwicklung einer Brennkraftmaschine 1 werden die genannten Teilsysteme optimiert bzw. erfolgt eine Anpassung der Sensoren und Aktoren an die Brennkraftmaschine 1. Insbesondere erfolgt dazu eine Bedatung von Steuerungs- und Regelungsfunktionen sowie Kennlinien und Kennfeldern, die, wie allgemein bekannt, in Verbindung mit dem Steuergerät 1e abgebildet sind bzw. ablaufen und einen sicheren und wirtschaftlichen Betrieb der Brennkraftmaschine 1 ermöglichen.

Beispielsweise wird das erste Teilsystem bzw. werden die damit in Wechselwirkung stehenden Kennlinien, Kennfelder und Steuerungs- und Regelungsfunktionen zunächst dadurch optimiert, dass die Brennkraftmaschine 1 in verschiedenen Betriebspunkten betrieben wird und das Signal des zweiten Sensors 3 zur Erfassung des Anteils an Frischluft, welcher der Brennkraftmaschine 1 zufließt, einem Referenzsignal gegenübergestellt wird und z. B. durch Variation eines betriebspunktabhängigen Faktors vorhandene Abweichungen zwischen den beiden Signalen ausgeglichen werden, wobei der dabei gewonnene Faktor in einem Kennfeld abgelegt wird. Das Referenzsignal kann zum Beispiel mittels eines besonders geeichten weiteren Sensors erzeugt werden oder es wird modelliert. Die Variation des betriebspunktabhängigen Faktors kann, wie allgemein bekannt, durch eine Person per Hand erfolgen oder automatisch mittels Softwarewerkzeugen, wie einem geeigneten Matlab- oder VBA-Skript gemäß der DE102004013205A1. D. h. sämtliche im Folgenden als Anpassungsprozesse definierte Abläufe zur Optimierung einer Brennkraftmaschine 1 können manuell oder automatisiert gestartet und durchgeführt bzw. abgeschlossen werden. Sind die Faktoren für alle Betriebspunkte optimiert, d. h. das Signal des zweiten Sensors 3 und das Referenzsignal stimmen überein oder weisen nur noch eine Abweichung in einer bestimmten Bandbreite auf, ist die Grundlage für weitere Optimierungsschritte gelegt.

Insbesondere können nun die Parameter der oben genannten Regelung zur Einstellung eines Sollwertes für den Anteil an Frischluft, welcher der Brennkraftmaschine 1 zufließt, optimiert werden, da nun das Signal des zweiten Sensors 3 eine entsprechende Güte aufweist oder anders gesagt genau genug ist, so dass es nun möglich ist, die Regelung zu optimieren. Es zeigt sich anhand des vorgenannten Beispiels zunächst, dass es innerhalb des ersten mechatronischen Teilsystems einer Brennkraftmaschine 1 mehrere Optimierungs-, Kalibrierungs- oder Anpassungsprozesse gibt, die bei der Entwicklung einer Brennkraftmaschine 1 ablaufen. Ferner zeigt sich, dass diese Prozesse miteinander in Wechselwirkung stehen, d. h. ist eine bestimmte Güte einer "Grundbedatung" noch nicht erreicht bzw. ist der Prozess zur Anpassung einer grundlegenden Steuerungs- und/oder Regelungsfunktion noch nicht so weit fortgeschritten, sollte eine darauf aufbauende weitere Steuerungs- und/oder Regelungsfunktion noch nicht angepasst werden, da diese Anpassung dann nicht zu einem befriedigenden Ergebnis führen wird infolge der sich noch ändernden "Basisgrößen". Diese während der Optimierung innerhalb des ersten mechatronischen Teilsystems ablaufenden Anpassungsprozesse stehen darüber hinaus auch mit Anpassungsprozessen des zweiten mechatronischen Teilsystems in Wechselwirkung. Wie beschrieben, wird innerhalb dieses zweiten Teilsystems ein Regelkreis gebildet, indem mittels des dritten Sensors 4, der stromauf des Katalysators 1g angeordnet ist, ein Istwert für den Anteil an Restsauerstoff im Abgas bestimmt wird, der mit einem Sollwert verglichen wird, wobei in Abhängigkeit einer Abweichung zwischen Soll- und Istwert mittels der Injektoren 1h der Anteil an Kraftstoff eingestellt wird, welcher der Brennkraftmaschine 1 zugeführt wird. Die Wechselwirkung zwischen dem ersten und dem zweiten Teilsystem ergibt sich z. B. daraus, dass die Einstellung des Anteils an Kraftstoff, welcher der Brennkraftmaschine 1 zugeführt wird, in Abhängigkeit des Anteils an Frischluft erfolgt, welcher der Brennkraftmaschine 1 zugeführt wird, d. h. in Abhängigkeit der Genauigkeit des zweiten Sensors 3, so dass es nicht zweckmäßig ist, die genannte Regelung innerhalb des zweiten Teilsystems dann zu kalibrieren, wenn die grundlegende Funktion zur Bereitstellung eines Signals des zweiten Sensors 3 noch nicht ausreichend zuverlässig ist. D. h. der Anpassungsprozess betreffend die vorgenannte Regelung, der z. B. darin besteht, verschiedene Betriebspunkte der Brennkraftmaschine 1 anzufahren und dort Variationen von Parametern der Regelung vorzunehmen, was per Hand oder per Software auch selbständig erfolgen kann, sollte nicht gestartet werden, bevor nicht ein anderer Anpassungsprozess abgeschlossen ist oder derart fortgeschritten ist, dass eine bestimmte Güte der Anpassung erreicht ist.

Andererseits sind die Anpassungsprozesse für die unterschiedlichen Funktionen zur Steuerung- und/oder Regelung einer Brennkraftmaschine 1 nicht zwangsläufig voneinander abhängig bzw. bauen nicht alle Optimierungsprozesse unmittelbar aufeinander auf oder bedingen ein bestimmtes Gütemaß der Anpassung einer weiteren solchen Funktion. Zum Beispiel ist die innerhalb des zweiten Teilsystems enthaltene Diagnosefunktion zur Bestimmung der Wirksamkeit des Katalysators 1g nicht abhängig von der Güte der Optimierung der Funktion zur Bereitstellung eines in Abhängigkeit des zweiten Sensors 3 bestimmten Wertes für den Anteil an Frischluft, welcher der Brennkraftmaschine 1 zufließt, da eine dafür erforderliche Veränderung des Anteils an Kraftstoff über einen bestimmten Zeitraum auch dann möglich ist, wenn der Anteil an Frischluft, welcher der Brennkraftmaschine 1 zufließt, konstant ist, sich aber auf einem nicht korrekten Niveau befindet bzw. ein bestimmter Offset des Signals des zweiten Sensors 3 gegenüber einem Referenzsignal vorhanden ist. Mit anderen Worten kann das Verbrennungsluftverhältnis auch dann durch eine Änderung des Anteils an Kraftstoff variiert werden, wenn der Anteil an Frischluft noch nicht korrekt bestimmt wird, zumal sich die Ermittlung des Verbrennungsluftverhältnisses stromauf und stromab des Katalysators 1g auf die Signale des dritten Sensors 4 und des vierten Sensors 5 stützt. Neben den beschriebenen vorhandenen oder nicht vorhandenen Abhängigkeiten unter den Anpassungsprozessen der verschiedenen Funktionen zur Steuerung und/oder Regelung der Brennkraftmaschine 1 gibt es auch Umweltbedingungen, von denen es abhängig ist, den Anpassungsprozess einer Funktion zur Steuerung und/oder Regelung der Brennkraftmaschine 1 zu starten oder zu bestimmen, welches Gütemaß diese Funktion schon erreicht hat. Zum Beispiel wird mit dem fünften Sensor 6 die Umgebungstemperatur erfasst. Ist die Umgebungstemperatur sehr hoch, beispielsweise 30 Grad Celsius, dann ist es nicht sinnvoll, einen Anpassungsprozess zur Optimierung des Kaltstarts oder des Warmlaufes der Brennkraftmaschine 1 zu starten oder einen Prozess zu starten, der dazu dient, zu bestimmen, welches Gütemaß die Optimierung dieser Funktion schon erreicht hat. Dementsprechend kann auch das Signal des sechsten Sensors 7 bei der Auswahl der zu startenden bzw. durchzuführenden Anpassungsprozesse zusätzlich herangezogen werden, d. h. ist zum Beispiel der Umgebungsluftdruck sehr niedrig, kann es sinnvoll sein, eine vom Umgebungsluftdruck abhängige Funktion zunächst nicht anzupassen.

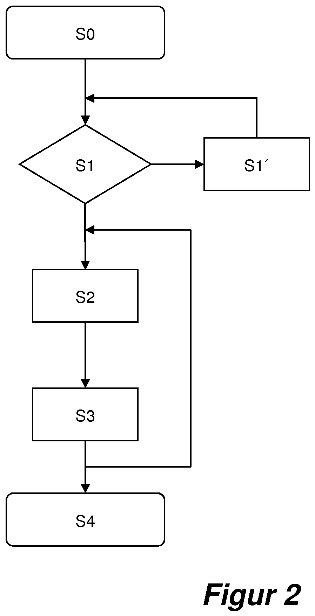

Erfindungsgemäß wird für eine effiziente Optimierung des Betriebes der Brennkraftmaschine 1, z. B. wie in Figur 2 gezeigt, mittels eines Steuerprogramms verfahren. Zunächst wird das erfindungsgemäße Verfahren in S0 gestartet. In S1 wird abgefragt, ob für die Güte der Anpassung der einzelnen Funktionen des gesamten mechatronischen Systems schon ausreichende Informationen vorliegen oder nicht. Wenn nicht, werden diese zunächst in S1' ermittelt, z. B. durch einen ersten Prüflauf der Brennkraftmaschine 1 auf einem Prüfstand in vorgegebenen Betriebspunkten. Angenommen, es erfolgt eine erste Anpassung der einzelnen Funktionen an die Brennkraftmaschine 1, dann ist die Güte der Anpassung zunächst jeweils minimal. Die Güte kann z. B. durch prozentuale Angaben/Werte dargestellt werden. Beispielsweise 0%, 50% oder 100%. Der Wert 0% wird zum Beispiel dann für die Güte einer Anpassung einer Funktion vergeben, wenn eine wesentliche Kenn- oder Zustandsgröße dieser Funktion gegenüber einem Referenzwert eine Abweichung von mehr als 20% aufweist. Der Wert 50% wird dann vergeben, wenn nur noch eine Abweichung von 10% vorhanden ist. Der Wert von 100% wird vergeben, wenn nur noch eine Abweichung von <3% vorhanden ist. Diese Gütezuordnung kann zum Beispiel für die beschriebene grundlegende Funktion innerhalb des ersten mechatronischen Teilsystems zur Bestimmung des Wertes für den Anteil an Frischluft, welcher der Brennkraftmaschine 1 zufließt, das Ergebnis haben, dass der in Abhängigkeit des zweiten Sensors 3 ermittelte Wert für den Anteil an Frischluft gegenüber einem Referenzwert eine Abweichung von mehr als 20% aufweist, so dass zunächst ein Wert für die Güte der Anpassung dieser Funktion von 0% vergeben wird. Während dieses Prüflaufes in S1' wird auch die Güte der Anpassung der weiteren innerhalb des ersten Teilsystems enthaltenen Funktion zur Regelung des Anteils an Frischluft, welcher der Brennkraftmaschine 1 zufließt, ermittelt. Eine mögliche Kenn- oder Zustandsgröße dieser Regelungsfunktion kann zum Beispiel ein Parameter einer Antwortfunktion der Regelgröße sein bei einer sprunghaften Änderung des Sollwertes, z. B. die Zeit, bis der Sollwert eingeregelt ist. Auch hier wird beispielsweise noch eine Abweichung von mehr als 20% gegenüber einem Vorgabewert vorliegen, so dass auch wieder nur ein Gütewert von 0% ermittelt wird. Das trifft nun zum Beispiel auch für die innerhalb des zweiten Teilsystems enthaltene Diagnosefunktion des Katalysators 1g zu, d. h. dass zum Beispiel die Zeit, bis ein auswertbares Signal bereitsteht, welches die Speicherkapazität des Katalysators 1g beschreibt, noch mehr als 20% von einem Zielwert entfernt ist, so dass auch hier nur ein Gütewert von 0% ermittelt wird.

Erfindungsgemäß werden in S2 die Gütewerte dieser drei Funktionen einer Bedingungsprüfung unterzogen. Die in S2 vorgegebene Bedingung wird z. B. von einer Bedienperson vorgegeben. Diese Vorgabe von Bedingungen dient der Priorisierung der Anpassungsprozesse der einzelnen Funktionen des mechatronischen Systems zueinander.

Mit anderen Worten wird durch die im Folgenden genauer beschriebenen Bedingungen eine Reihenfolge der durchzuführenden Anpassungsprozesse der einzelnen Steuergerätefunktionen vorgegeben. Somit wird quasi ein Ablaufplan erstellt, welcher die Abhängigkeit der einzelnen Steuergerätefunktionen untereinander, hinsichtlich der schon erreichten Güte der Optimierung dieser Funktion berücksichtigt. Die Bedingung in S2 ist beispielsweise derart formuliert, dass betreffend der ersten Funktion innerhalb des ersten Teilsystems zur Bestimmung eines Istwertes des Anteils an Frischluft, welcher der Brennkraftmaschine 1 zufließt, mittels des zweiten Sensors 3 solange eine Anpassung dieser Funktion, also eine Bestimmung von Faktoren zur Korrektur des Signals des zweiten Sensors 3, vorgenommen wird, bis ein Gütewert von 100% dieser Funktion erreicht ist und dass erst dann mit der Anpassung der weiteren Funktion innerhalb des ersten Teilsystems begonnen wird, nämlich der Funktion zu der Regelung des Anteils an Frischluft, welcher der Brennkraftmaschine 1 zufließt, wenn die erste Funktion innerhalb des ersten Teilsystems zur Bestimmung eines Istwertes des Anteils an Frischluft, welcher der Brennkraftmaschine 1 zufließt, einen Gütewert >50% hat. Die Bedingung in S2 ist ferner so formuliert, dass die Funktion zur Diagnose des Katalysators 1g schon parallel mit der Anpassung der ersten Funktion innerhalb des ersten Teilsystems zur Bestimmung eines Istwertes des Anteils an Frischluft erfolgt, welcher der Brennkraftmaschine 1 zufließt, da diese Funktion innerhalb des zweiten Teilsystems, wie schon beschrieben, unabhängig von der Güte der Anpassung der ersten Funktion innerhalb des ersten Teilsystems ist. Gemäß Figur 2 wird demnach in S3 zunächst die Anpassung der ersten Funktion innerhalb des ersten Teilsystems zur Bestimmung eines Istwertes des Anteils an Frischluft, welcher der Brennkraftmaschine 1 zufließt, sowie parallel die Anpassung der Funktion zur Diagnose des Katalysators 1g gestartet und durchgeführt, jedoch nicht die Anpassung der weiteren Funktion innerhalb des ersten Teilsystems, nämlich der Funktion zu der Regelung des Anteils an Frischluft, welcher der Brennkraftmaschine 1 zufließt. Das Starten und die Durchführung der Anpassungsprozesse kann, beispielsweise nach einer Information an die Bedienperson von der Bedienperson manuell erfolgen oder aber der Start erfolgt manuell und die Durchführung automatisiert oder der Start und die Durchführung erfolgen automatisiert mittels des Steuerprogramms. Die sich bei dieser Anpassung immer weiter verbessernden Gütewerte werden gemäß Figur 2 wieder S2 zugeführt, beispielsweise in Abhängigkeit von einem bestimmten Zeitplan. Somit erfolgt in S2 immer wieder eine Prüfung der genannten Bedingung, wobei dann mit der Anpassung der weiteren Funktion innerhalb des ersten Teilsystems begonnen wird, d. h. mit der Funktion zu der Regelung des Anteils an Frischluft, welcher der Brennkraftmaschine 1 zufließt, wenn gemäß S2 die erste Funktion innerhalb des ersten Teilsystems zur Bestimmung eines Istwertes des Anteils an Frischluft, welcher der Brennkraftmaschine 1 zufließt, einen Gütewert >50% erreicht hat. Erfindungsgemäß laufen die Anpassungsprozesse für alle drei genannten Funktionen ab dem Zeitpunkt parallel zueinander. Haben alle Anpassungsprozesse einen Zielwert erreicht, insbesondere einen Gütewert von 100%, dann wird das erfindungsmäße Verfahren in S4 beendet.

Erfindungsgemäß umfasst die Bedingung in S2 auch noch Informationen über Umwelteinflüsse bzw. andere Größen der Brennkraftmaschine 1. Weist zum Beispiel die Umgebungstemperatur, der Umgebungsluftdruck oder die Abgastemperatur nicht oder noch nicht einen bestimmten Wert auf, wird gemäß der Bedingung in S2 zwar der Anpassungsprozess der ersten Funktion innerhalb des ersten Teilsystems zur Bestimmung eines Istwertes des Anteils an Frischluft, welcher der Brennkraftmaschine 1 zufließt, gestartet, noch nicht aber der Anpassungsprozess betreffend die Funktion zur Diagnose des Katalysators 1g, da dieser Prozess verlangt, dass die Abgastemperatur einen bestimmten Wert erreicht. Neben dem sich bei der Anpassung des aktuell nur einen laufenden Anpassungsprozesses immer weiter verbessernden Gütewertes, betreffend diese Funktion, wird gemäß Figur 2 nicht nur dieser Gütewert wieder S2 zugeführt, sondern auch Informationen zu der Abgastemperatur, wobei wenn die Abgastemperatur einen bedingungsgemäßen Wert erreicht hat, neben dem schon laufenden Anpassungsprozess den Anpassungsprozess betreffend die Funktion zur Diagnose des Katalysators 1g gestartet wird oder bei Unterschreiten des bedingungsgemäßen Wertes wieder abgebrochen wird.

Erfindungsgemäß umfasst die Bedingung in S2 auch noch Informationen zu den Betriebspunktparametern der Brennkraftmaschine 1, d. h. dem Systemzustand der Brennkraftmaschine 1, so dass dann ein Anpassungsprozess gestartet oder abgebrochen wird, wenn nicht bestimmte Betriebsparameter vorliegen. Angenommen die Brennkraftmaschine 1 wird vorwiegend in Betriebspunkten im Hochlastbereich betrieben und es wird zum Schutz des Katalysators 1g ein vergleichsweise großer Anteil an Kraftstoff der Brennkraftmaschine 1 zugeführt, dann ist es nicht zweckmäßig, den Anpassungsprozess betreffend die Funktion zur Diagnose des Katalysators 1g zu starten oder durchzuführen, da die dafür nötigen Variationen des Verbrennungsluftverhältnisses nicht möglich sind, ohne eine thermische Schädigung des Katalysator 1g zu riskieren.

Ferner kann die Bedingung in S2 Informationen zu funktionalen Zusammenhängen der einzelnen Anpassungsprozesse untereinander aufweisen. D. h. grundlegende Funktionen, wie zum Beispiel die erste Funktion innerhalb des ersten Teilsystems zur Bestimmung eines Istwertes des Anteils an Frischluft, welcher der Brennkraftmaschine 1 zufließt, sind quasi system- bzw. funktionsbedingt vor darauf aufbauenden Funktionen, wie zum Beispiel der weiteren Funktion innerhalb des ersten Teilsystems, nämlich der Funktion zu der Regelung des Anteils an Frischluft, welcher der Brennkraftmaschine 1 zufließt, anzupassen. Erfindungsgemäß ist es weiterhin möglich, die Abhängigkeit der einzelnen Anpassungsprozesse untereinander hinsichtlich der erreichten Güte, der Umweltbedingungen und der Betriebspunktparameter der Brennkraftmaschine innerhalb eines Steuerprogramms mittels einer Adjazenzmatrix zu beschreiben. Diese Adjazenzmatrix wird dabei z. B. aus drei Teilmatrizen gebildet. Eine erste Teilmatrix

$$
\mathbf{P_{adj_{P_{MSG}}}} = \mathbf{G} = \begin{pmatrix} \mathbf{g}_{P_1P_1} & \mathbf{g}_{P_1P_2} & \cdots & \mathbf{g}_{P_1P_m} \\ \mathbf{g}_{P_2P_1} & \mathbf{g}_{P_2P_2} & \cdots & \mathbf{g}_{P_2P_m} \\ \vdots & \vdots & \vdots & \vdots \\ \mathbf{g}_{P_mP_1} & \mathbf{g}_{P_mP_2} & \cdots & \mathbf{g}_{P_mP_m} \end{pmatrix} = \begin{pmatrix} \vec{\mathbf{0}} & \mathbf{g}_{P_1P_2} & \cdots & \mathbf{g}_{P_1P_m} \\ \mathbf{g}_{P_2P_1} & \vec{\mathbf{0}} & \cdots & \mathbf{g}_{P_2P_m} \\ \vdots & \vdots & \vdots & \vdots \\ \mathbf{g}_{P_mP_1} & \mathbf{g}_{P_mP_2} & \cdots & \vec{\mathbf{0}} \end{pmatrix}
$$

betrifft die Güte G der einzelnen Anpassungsprozesse P, bei der Entscheidung, ob ein Anpassungsprozess P gestartet und durchgeführt werden soll. Diese erste Teilmatrix ist quadratisch, d. h. hat die gleiche Anzahl von m Zeilen und von n Spalten, entsprechend der Anzahl m = n der Anpassungsprozesse P und beschreibt die einzelnen Abhängigkeiten der Anpassungsprozesse P untereinander. Beispielsweise entspricht der Anpassungsprozess $P_1$ gemäß dem vorgenannten Ausführungsbeispiel, der ersten Funktion innerhalb des ersten Teilsystems zur Bestimmung eines Istwertes des Anteils an Frischluft, welcher der Brennkraftmaschine 1 zufließt, mittels des zweiten Sensors 3 und der Anpassungsprozess P2 entspricht der weiteren Funktion innerhalb des ersten Teilsystems, nämlich der Funktion zu der geregelten Einstellung des Anteils an Frischluft, welcher der Brennkraftmaschine 1 zufließt.

Die zweite Teilmatrix

$$
\mathbf{P_{adj_{S_{MSG}}}} = S = \begin{pmatrix} \mathbf{g}_{S_1P_1} & \mathbf{g}_{S_2P_1} & \cdots & \mathbf{g}_{S_qP_1} \\ \mathbf{g}_{S_1P_2} & \mathbf{g}_{S_2P_2} & \cdots & \mathbf{g}_{S_qP_2} \\ \vdots & \vdots & \vdots & \vdots \\ \mathbf{g}_{S_1P_m} & \mathbf{g}_{S_2P_m} & \cdots & \mathbf{g}_{S_qP_m} \end{pmatrix}
$$

betrifft die Berücksichtigung der verschiedenen Systemzustände S, bei der Entscheidung, ob ein Anpassungsprozess P gestartet und durchgeführt werden soll, d. h. insbesondere die Berücksichtigung der Betriebspunktparameter der Brennkraftmaschine 1, wobei die Anzahl der m Zeilen der Anzahl der Anpassungsprozesse P entspricht und die Anzahl der q Spalten der Anzahl der Systemzustände S entspricht. Beispielsweise entspricht der Anpassungsprozess $P_1$ gemäß dem vorgenannten Ausführungsbeispiel, der ersten Funktion innerhalb des ersten Teilsystems zur Bestimmung eines Istwertes des Anteils an Frischluft, welcher der Brennkraftmaschine 1 zufließt, mittels des zweiten Sensors 3 und der Anpassungsprozess P2 entspricht der weiteren Funktion innerhalb des ersten Teilsystems, nämlich der Funktion zu der geregelten Einstellung des Anteils an Frischluft, welcher der Brennkraftmaschine 1 zufließt und der Systemzustand $S_1$ repräsentiert einen Betriebspunkt der Brennkraftmaschine 1 bzw. die Parameter, die diesen Punkt beschreiben.

Die dritte Teilmatrix

$$
\mathbf{P_{adj_{U_{MSG}}}} = \begin{pmatrix} \mathbf{g}_{U_1P_1} & \mathbf{g}_{U_2P_1} & \cdots & \mathbf{g}_{U_rP_1} \\ \mathbf{g}_{U_1P_2} & \mathbf{g}_{U_2P_2} & \cdots & \mathbf{g}_{U_rP_2} \\ \vdots & \vdots & \vdots & \vdots \\ \mathbf{g}_{U_1P_m} & \mathbf{g}_{U_2P_m} & \cdots & \mathbf{g}_{U_rP_m} \end{pmatrix}
$$

betrifft die Berücksichtigung der verschiedenen Umweltzustände U, bei der Entscheidung, ob ein Anpassungsprozess P gestartet und durchgeführt werden soll, d. h. die Berücksichtigung der Umgebungsbedingungen der Brennkraftmaschine 1, wie dem Luftdruck oder der Lufttemperatur, wobei die Anzahl der m Zeilen der Anzahl der Anpassungsprozesse P entspricht und Anzahl der q Spalten der Anzahl der Umweltzustände U entspricht. Beispielsweise entspricht der Anpassungsprozess $P_1$ gemäß dem vorgenannten Ausführungsbeispiel, der ersten Funktion innerhalb des ersten Teilsystems zur Bestimmung eines Istwertes des Anteils an Frischluft, welcher der Brennkraftmaschine 1 zufließt, mittels des zweiten Sensors 3 und der Anpassungsprozess P2 entspricht der weiteren Funktion innerhalb des ersten Teilsystems, nämlich der Funktion zu der geregelten Einstellung des Anteils an Frischluft, welcher der Brennkraftmaschine 1 zufließt der Umweltzustand $U_1$ repräsentiert z. B. den Luftdruck und/oder die Lufttemperatur rund um die Brennkraftmaschine 1.

Die Multiplikation der drei Teilmatrizen ergibt eine gesamthafte Matrix,

$$P_{adj_{PSU_{MSG}}} = P_{adj_{P_{MSG}}} \bullet P_{adj_{S_{MSG}}} \bullet P_{adj_{U_{MSG}}}$$

welche erfindungsgemäß die Abhängigkeiten der einzelnen Anpassungsprozesse P untereinander hinsichtlich ihrer Güte G, die Abhängigkeiten der einzelnen Anpassungsprozesse P hinsichtlich des Umweltzustands U (z. B. Druck und Temperatur) der Brennkraftmaschine 1 und die Abhängigkeiten der einzelnen Anpassungsprozesse hinsichtlich des Systemzustands S, insbesondere betreffend die Betriebspunktparameter der Brennkraftmaschine 1 beschreibt.

D. h. es wird erfindungsgemäß ein Steuerprogramm (Scheduler) definiert, wobei zur Definition des Steuerprogramms Matrixoperationen genutzt werden. Die Besetzung der Matrixelemente bestimmt den Aufwand in der Matrixoperation. Sind bestimmte Anpassungsprozesse P bei dem Ablauf des Steuerprogramms abgearbeitet, d. h. es liegt eine maximal mögliches Gütemaß G vor, dann werden die entsprechenden Elemente der ersten Teilmatrix mit Nullen gefüllt.

Zusammengefasst läuft das erfindungsgemäße Verfahren mittels eines Steuerprogramms (Scheduler) unter Nutzung der z. B. drei genannten Adjazenzmatrizen wie folgt ab.

Die numerischen Werte jeder einzelnen Adjazenzmatrix werden zyklisch aktualisiert.

D. h. die Aktualisierung erfolgt z. B. durch Polling, d. h. durch eine zyklische Abfrage von Änderungen von Werten betreffend die Umweltzustände U und die Systemzustände S, die z. B. mittels externer Hard- und/oder Software, die mit dem Steuergerät 1e verbunden ist, bereitgestellt werden.

Dadurch spiegeln zu jedem Zeitpunkt die Adjazenzmatrizen $P_{adj_{U_{MSG}}}$ und $P_{adj_{S_{MSG}}}$ den Status der Umweltzustände U und Systemzustände S wider.

Die Adjazenzmatrix $P_{adj_{P_{MSG}}}$ für die Abhängigkeiten der Anpassungsprozesse P untereinander, wird in Abhängigkeit ihrer Veränderungen im Rahmen eines laufenden Anpassungsprozesses P aktualisiert.

Um zu jedem durch das Polling vorgegebenen Zeitpunkt den aktuellen Status des Schedulers, d. h. der einzelnen Adjazenzmatrizen $P_{adj_{U_{MSG}}}$, $P_{adj_{S_{MSG}}}$ und $P_{adj_{P_{MSG}}}$ vorliegen zu haben, muss der Scheduler natürlich entsprechend der Pollingfrequenz aktualisiert und ausgewertet werden.

Aus dieser zyklischen Auswertung heraus, wird dann der Anpassungsprozess P gestartet, welcher aufgrund der Auswertung der drei Adjazenzmatrizen derjenige ist, der die höchste Priorität hat.

Der Scheduler ist auch jederzeit in der Lage einen laufenden Anpassungsprozess P aufgrund der laufenden Aktualisierung eine neue Priorisierung der Anpassungsprozesse P vorzunehmen. Dieses kann z. B. dazu führen, dass ein laufender Anpassungsprozess P abgebrochen wird und dafür ein anderer, z. B. aufgrund von Änderungen in den Systemzuständen S, gestartet wird.

Das Starten und die Durchführung der Anpassungsprozesse P kann auch bei dieser Ausführung, beispielsweise nach einer Information an die Bedienperson von der Bedienperson manuell erfolgen oder aber der Start erfolgt manuell und die Durchführung automatisiert oder der Start und die Durchführung erfolgen automatisiert mittels des Steuerprogramms.

Zur Veranschaulichung sei das erfindungsgemäße Verfahren mittels eines Steuerprogramms (Scheduler) unter Nutzung einer Adjazenzmatrix hier nochmals an einem praktischen Beispiel skizziert:

Zum einem Zeitpunkt $t_0$ sei folgende Konstellation gegeben. Zur Vereinfachung sei hier nur der Leerlaufbereich der Brennkraftmaschine 1 betrachtet. Es sind drei Anpassungsprozesse P1 bis P3 gegeben.

Der erste Anpassungsprozess P1 betrifft die Anpassung der ersten Funktion innerhalb des ersten Teilsystems zur Bestimmung eines Istwertes des Anteils an Frischluft, welcher der Brennkraftmaschine 1 zufließt, mittels des zweiten Sensors 3, im weiteren Verlauf als "Füllungserfassung" bezeichnet. Die Füllungserfassung ist bekannterweise eine grundlegende Funktion, auf die eine Vielzahl weiterer Funktionen aufbauen.

Der zweite Anpassungsprozess P2 betrifft die Anpassung des so genannten Momentenpfades, d. h. einer Funktion, welche den Zusammenhang zwischen Betriebsparametern der Brennkraftmaschine 1 und dem von der Brennkraftmaschine 1 bereitgestellten Drehmoment beschreibt. Die Betriebsparameter sind insbesondere die Drehzahl, der Zündzeitpunkt, das Verbrennungsluftverhältnis, und der Anteil an Frischluft, welcher der Brennkraftmaschine 1 zufließt, im Weiteren als "Füllung" bezeichnet. Der Momentenpfad baut folglich auf der Füllungserfassung auf.

Der dritte Anpassungsprozess P3 betrifft die Regelung der Drehzahl der Brennkraftmaschine 1 im Leerlauf, im weiteren Verlauf als "Leerlaufregler" bezeichnet. Der "Leerlaufregler" baut auf dem Momentenpfad auf, d. h. es werden, wie allgemein bekannt, zur Regelung der Drehzahl im Leerlauf so genannte Drehmomentreserven vorgehalten und zur schnellen Einstellung der Drehzahl verwendet, wobei die Drehmomentreserven aus dem Momentenpfad abgeleitet werden.

Der Anpassungsprozess P1 der Füllungserfassung sei in allen Betriebspunkten der Brennkraftmaschine 1 hinreichend genau parametriert, d. h. eine ausreichende Güte des Anpassungsprozesses P1 von, in diesem Fall größer 97%, ist erreicht.

Der nachgelagerte Anpassungsprozess P2 des Momentenpfades sei ebenfalls über alle Betriebspunkte der Brennkraftmaschine (Last/Drehzahl), außer im Leerlaufbereich, hinreichend genau parametriert, d. h. eine Güte des Anpassungsprozesses P2 von, in diesem Fall kleiner 97%, ist erst erreicht.

Der somit noch danach gelagerte Anpassungsprozess P3 des Leerlaufreglers kann folglich erst angestoßen werden, wenn im Leerlaufbereich eine hinreichende Güte des Anpassungsprozesses P2 des Momentenpfades erreicht worden ist.

Damit haben die drei Matrizen, wie oben skizziert, folgenden Zustand zum Zeitpunkt $t_0$:

$$\mathbf{P}_{\mathrm{adj}_{P_{MSG}}} = \mathbf{G} = \begin{bmatrix} \mathbf{g}_{P_1P_1} & \mathbf{g}_{P_1P_2} & \mathbf{g}_{P_1P_3} \\ \mathbf{g}_{P_2P_1} & \mathbf{g}_{P_2P_2} & \mathbf{g}_{P_2P_3} \\ \mathbf{g}_{P_3P_1} & \mathbf{g}_{P_3P_2} & \mathbf{g}_{P_3P_3} \end{bmatrix} = \begin{bmatrix} \vec{\mathbf{0}} & \mathbf{g}_{P_1P_2} & \mathbf{g}_{P_1P_3} \\ \mathbf{g}_{P_2P_1} & \vec{\mathbf{0}} & \mathbf{g}_{P_2P_3} \\ \mathbf{g}_{P_3P_1} & \mathbf{g}_{P_3P_2} & \vec{\mathbf{0}} \end{bmatrix} = \begin{bmatrix} 0 & 97 & 97 \\ 0 & 0 & 97 \\ 0 & 0 & 0 \end{bmatrix}$$

Das Matrixelement ($\mathbf{g}_{P_1P_2}$) gibt demnach an, dass der Anpassungsprozess P1 für die Füllungserfassung eine Güte von 97% aufweisen muss, bis der Anpassungsprozess P2 für den Momentenpfad gestartet werden darf.

Das Matrixelement ($\mathbf{g}_{P_1P_3}$) gibt demnach an, dass der Anpassungsprozess P1 für die Füllungserfassung eine Güte von 97% aufweisen muss, bis der Anpassungsprozess P3 für den Leerlaufregler gestartet werden darf. Dies ist jedoch mehr akademischer Natur, da in der Praxis davon auszugehen ist, dass nur eine hinreichende Genauigkeit der Füllungserfassung zu einer hinreichenden Genauigkeit der Momentenbedatung führt.

Das Matrixelement ($\mathbf{g}_{P_2P_3}$) gibt demnach an, dass der Anpassungsprozess P2 für den Momentenpfad eine Güte von 97% aufweisen muss, bis der Anpassungsprozess P3 für den Leerlaufregler gestartet werden darf.

D. h. sowohl die Füllungserfassung, als auch der Momentenpfad müssen eine Genauigkeit von 97% aufweisen, bevor der Leerlaufregler parametriert werden kann.

Sollte die Auswertung des Schedulers ergeben, dass der Anpassungsprozess P2 des Momentenpfades kleiner 97 % Güte hat (z. B. beträgt die Abweichung zwischen dem real gemessenen Drehmoment der Brennkraftmaschine 1 an einem Prüfstand und dem mittels des Momentenpfades modellierten Drehmomentes mehr als 3%), wird der Anpassungsprozess P3 für den Leerlaufregler nicht gestartet.

Hinsichtlich der Systemzustände S ergibt sich nun folgendes:

$$\mathbf{P}_{\mathrm{adj}_{S_{MSG}}} = S = \begin{bmatrix} \text{LL - Bereich, Füllungserfassung aktiv} & \text{Fahrzeug steht, Füllungserfassung aktiv} & \text{Fahrzeug fährt, Füllungserfassung aktiv} \\ \text{LL - Bereich, Momentenpfad aktiv} & \text{Fahrzeug steht, Momentenpfad aktiv} & \text{Fahrzeug fährt, Momentenpfad aktiv} \\ \text{LL - Bereich, LLR aktiv} & \text{Fahrzeug steht, LLR aktiv} & \text{Fahrzeug fährt, Momentenpfad aktiv} \end{bmatrix} = \begin{bmatrix} 1 & 1 & 1 \\ 1 & 1 & 1 \\ 1 & 1 & 1 \end{bmatrix}$$

Hierbei bedeutet "LL-Bereich", dass die Brennkraftmaschine 1 im Leerlauf bei einer bestimmten Drehzahl betrieben wird, d. h. die Betriebspunktparameter sind die Drehzahl und "Null-Last".

Hierbei steht weiterhin die Abkürzung "LLR" für Leerlaufregler und die Formulierung "Fahrzeug steht/fährt" bezieht sich darauf, dass die Brennkraftmaschine 1 zum Antrieb eines Fahrzeuges in diesem angeordnet ist und die Brennkraftmaschine 1 dennoch arbeitet bzw. aktiv ist.

D. h. je nach Systemzustand (hier wird nur der Leerlaufbereich betrachtet), werden die Matrixelemente entsprechend mit 1 und/oder 0 besetzt. Ob jedes der Matrixelemente für den entsprechenden Prozess P1, P2 oder P3 besetzt sein muss, hängt davon ab, ob der entsprechende Systemzustand einen Einfluss auf den entsprechenden Prozess P hat, z. B. ist der LL-Bereich für eine Diagnose des Katalysators 1g nicht relevant und damit würde das entsprechende Element in der Matrix zu Null gesetzt werden.

Für die Umgebungszustände U ergibt sich bei warmer Brennkraftmaschine 1 (z. B. Kühlwassertemperatur größer 70°C) und Umgebungsdruck von 1024 mbar (d. h. sonst keine weiteren Umweltzustände) folgendes Bild:

$$\mathbf{P}_{\mathrm{adj}_{U_{MSG}}} = \mathbf{P}_{\mathrm{adj}_{U_{MSG}}} = \begin{bmatrix} g_{U_1P_1} & g_{U_2P_1} & g_{U_3P_1} \\ g_{U_1P_2} & g_{U_2P_2} & g_{U_3P_2} \\ g_{U_1P3} & g_{U_2P_3} & g_{U_3P_3} \end{bmatrix} = \begin{bmatrix} \text{Warmer Motor, Füllungserfassung aktiv} & \text{Normdruck, Füllungserfassung aktiv} & 0 \\ \text{Warmer Motor, Momentenpfad aktiv} & \text{Normdruck, Momentenpfad aktiv} & 0 \\ \text{Warmer Motor, LLR aktiv} & \text{Normdruck, LLR aktiv} & 0 \end{bmatrix} = \begin{bmatrix} 1 & 1 & 0 \\ 1 & 1 & 0 \\ 1 & 1 & 0 \end{bmatrix}$$

Auch hier gilt das bisher gesagte, dass nur die Matrixelemente besetzt werden, deren Elemente (Umgebungszustände U) einen Einfluss auf den dazugehörigen Prozess P haben.

Durch die Multiplikation aller Matrizen ergibt sich hiermit folgendes Bild:

$$P_{adj_{PSU_{MSG}}} = P_{adj_{P_{MSG}}} \bullet P_{adj_{S_{MSG}}} \bullet P_{adj_{U_{MSG}}} = \begin{bmatrix} 582 & 582 & 0 \\ 291 & 291 & 0 \\ 0 & 0 & 0 \end{bmatrix}$$

d. h. es würde aufgrund der Umweltzustände U, der Systemzustände S und ausreichender Güte von besser als 97 % Genauigkeit der vorgelagerten Füllungserfassung und der Momentenbedatung bzw. einer derartigen Güte der beiden Anpassungsprozesse P1 und P2, der Anpassungsprozess P3 des Leerlaufreglers gestartet werden. Wenn, wie angenommen, diese Gütekriterien, noch nicht erfüllt sind bzw. das durch die Multiplikation gebildete gesamthafte Gütekriterium repräsentiert durch $P_{adj_{PSU_{MSG}}}$ nicht erfüllt ist, dann wird der Anpassungsprozess P3 nicht gestartet. Daher kann diese Matrix $P_{adj_{PSU_{MSG}}}$ als Referenzmatrix für die Freigabe des Applikationsprozesses P3 für den Leerlaufregler betrachtet werden.

Zum Zeitpunkt $t_1$ wird angenommen, dass das Fahrzeug fährt. Es ergeben sich dann folgenden Matrizen:

$$P_{adj_{P_{MSG}}} = G = \begin{bmatrix} 0 & 97 & 97 \\ 0 & 0 & 97 \\ 0 & 0 & 0 \end{bmatrix}, \quad P_{adj_{S_{MSG}}} = S = \begin{bmatrix} 0 & 0 & 1 \\ 0 & 0 & 1 \\ 0 & 0 & 1 \end{bmatrix}, \quad P_{adj_{U_{MSG}}} = \begin{bmatrix} 1 & 1 & 0 \\ 1 & 1 & 0 \\ 1 & 1 & 0 \end{bmatrix}$$

$$P_{adj_{PSU_{MSG}}} = P_{adj_{P_{MSG}}} \bullet P_{adj_{S_{MSG}}} \bullet P_{adj_{U_{MSG}}} = \begin{bmatrix} 194 & 194 & 0 \\ 97 & 97 & 0 \\ 0 & 0 & 0 \end{bmatrix}$$

Wie zu erkennen, haben sich die Werte der Elemente in der Gesamtmatrix $P_{adj_{PSU_{MSG}}}$ entsprechen des geänderten Systemzustandes S geändert. Durch die Definition einer Referenzmatrix $P_{adj_{PSU_{MSG}}}$ zum Zeitpunkt $t_0$, welche die Zustände beschreibt, bei denen die entsprechenden Anpassungsprozesse P gestartet und durchgeführt werden können (z. B. wie bei $t_0$ für die Leerlaufregelung kurz beschrieben), kann der Scheduler durch aktiven Vergleich von Referenzmatrix $P_{adj_{PSU_{MSG}}}$ zum Zeitpunkt $t_0$ und aktualisierter Matrix $P_{adj_{PSU_{MSG}}}$ zum Zeitpunkt $t_1$ entsprechend entscheiden, welche Anpassungsprozesse P gestartet und durchgeführt werden können.

Die Bildung der Gesamt- und/oder Referenzmatrix $P_{adj_{PSU_{MSG}}}$ kann natürlich um weitere Teilmatrizen erweitert werden, wobei diese Teilmatrizen die funktionalen Zusammenhänge der Anpassungsprozesse P untereinander beschreiben und/oder die funktionalen Zusammenhänge beschreiben, welche das Zusammenwirken der Brennkraftmaschine, der Sensoren, der Aktoren sowie des Steuergerätes abbilden und die von dem Steuergerät ausgeführt werden. Beispielsweise besteht ein funktionales Zusammenwirken der Anpassungsprozesse P zueinander darin, dass zuerst die Füllungserfassung angepasst werden muss, bevor der Momentenpfad angepasst werden kann, da der Momentenpfad auf den Kenngrößen der Füllungserfassung aufbaut.

Weitere Betriebspunktparameter, das gilt für aktuelle Werte als auch für Sollwerte, die vom Steuergerät vorgegeben werden sind: Drehzahl/Einspritzmenge, Geschwindigkeit/Last, Geschwindigkeit/Einspritzmenge, Drehzahl/Moment, Geschwindigkeit/Moment, Kühlwassertemperatur, Ansauglufttemperatur, Zeit nach Startende, Katalysatortemperatur (vor, im, nach Kat), Luftmenge, Lambda (vor und nach Kat) Status Leerlauf, Status von jeder einzelnen Diagnose (Betriebsbereit, Freigegeben, Gesperrt, Blockiert, etc.), Drosselklappenstellung, VVT-Stellung, Ventilsteuerzeiten, Status Luftmassenmesser, Öltemperatur, Öldruck, Kraftstofftemperatur, Temperatursensorik im Abgasnachbehandlungssystem.

## Patentansprüche

1. Verfahren zur Optimierung einer Brennkraftmaschine, die Sensoren, Aktoren und ein Steuergerät umfasst, wobei das Zusammenwirken der Brennkraftmaschine, der Sensoren, der Aktoren und des Steuergerätes durch funktionale Zusammenhänge beschrieben ist, die mittels des Steuergerätes ausgeführt werden, wobei für ein optimales Zusammenwirken von Sensoren, Aktoren, Steuergerät und Brennkraftmaschine während der Entwicklung der Brennkraftmaschine einzelne Anpassungsprozesse durchgeführt werden, wobei die einzelnen Anpassungsprozesse durch Verwendung eines Steuerprogramms gestartet und durchgeführt werden, wobei die einzelnen Anpassungsprozesse in Abhängigkeit

a) der jeweils erreichten Güte der einzelnen Anpassungsprozesse,
b) der Umgebungsbedingungen und
c) des Systemzustandes der Brennkraftmaschine

gestartet und durchgeführt werden, wobei die Abhängigkeiten durch Teilmatrizen beschrieben werden, wobei aus den Teilmatrizen eine Adjazenzmatrix gebildet wird, wobei eine Referenz-Adjazenzmatrix gebildet wird, welche die Abhängigkeiten beschreibt, die für den Start und eine Durchführung der einzelnen Anpassungsprozesse bestehen, wobei die Adjazenzmatrix fortlaufend aktualisiert wird und in Abhängigkeit einer Gegenüberstellung der Referenz-Adjazenzmatrix mit der aktualisierten Adjazenzmatrix die Anpassungsprozesse gestartet und durchgeführt werden.

2. Verfahren nach Patentanspruch 1, wobei die einzelnen Anpassungsprozesse weiterhin in Abhängigkeit
d) der funktionalen Zusammenhänge der Anpassungsprozesse untereinander
gestartet und durchgeführt werden.

3. Verfahren nach Patentanspruch 1 oder 2, wobei die Umgebungsbedingungen der Umgebungsluftdruck und/oder die Umgebungstemperatur und/oder die Ansauglufttemperatur sind.

4. Verfahren nach Patentanspruch 1 bis 3, wobei der Systemzustand der Brennkraftmaschine durch Betriebspunktparameter der Brennkraftmaschine beschrieben ist.

5. Verfahren nach Patentanspruch 4, wobei die Betriebspunktparameter die Drehzahl und/oder die Last der Brennkraftmaschine sind.


**Claims**

1. Method for optimizing an internal combustion engine which comprises sensors, actuators and a control unit, wherein the interaction of the internal combustion engine, of the sensors, of the actuators and of the control unit is described by means of functional relationships which are executed by means of the control unit, wherein for optimum interaction of sensors, actuators, control unit and internal combustion engine during the development of the internal combustion engine individual adaptation processes are carried out, wherein the individual adaptation processes are started and carried out by using a control program, wherein the individual adaptation processes are started and carried out as a function of

a) the respectively achieved quality of the individual adaptation processes,
b) the ambient conditions and
c) the system state of the internal combustion engine,

wherein the dependencies are described by means of partial matrices, wherein an adjacent matrix is formed from the partial matrices, wherein a reference adjacent matrix is formed which describes the dependencies which are present for the start and for an execution of the individual adaptation processes, wherein the adjacent matrix is updated continuously, and the adaptation processes are started and carried out as a function of a juxtaposition of the reference adjacent matrix with the updated adjacent matrix.

2. Method according to Patent Claim 1, wherein the individual adaptation processes are also started and carried out as a function of
d) the functional relationships between the adaptation processes.

3. Method according to Patent Claim 1 or 2, wherein the ambient conditions are the ambient air pressure and/or the ambient temperature and/or the intake air temperature.

4. Method according to Patent Claims 1 to 3, wherein the system state of the internal combustion engine is described by means of operating point parameters of the internal combustion engine.

5. Method according to Patent Claim 4, wherein the operating point parameters are the rotational speed and/or the load of the internal combustion engine.

**Revendications**

1. Procédé d'optimisation d'un moteur à combustion interne, comprenant des capteurs, des actionneurs et un contrôleur, la coopération du moteur à combustion interne, des capteurs, des actionneurs et du contrôleur étant décrite par des relations fonctionnelles qui sont accomplies au moyen du contrôleur, des processus d'adaptation individuels étant réalisés pendant le développement du moteur à combustion interne pour une coopération optimale des capteurs, des actionneurs, du contrôleur et du moteur à combustion interne, les processus d'adaptation individuels étant démarrés et réalisés en utilisant un programme de commande, les processus d'adaptation individuels étant démarrés et réalisés en fonction

   a) de la qualité respectivement atteinte des processus d'adaptation individuels,
   b) des conditions environnantes et
   c) de l'état du système du moteur à combustion interne, les dépendances étant décrites par des matrices partielles, une matrice d'adjacence étant formée à partir des matrices partielles, une matrice d'adjacence de référence étant formée, laquelle décrit les dépendances qui existent pour le démarrage et la réalisation des processus d'adaptation individuels, la matrice d'adjacence étant continuellement actualisée et les processus d'adaptation individuels étant démarrés et réalisés en fonction d'une comparaison de la matrice d'adjacence de référence avec la matrice d'adjacence actualisée.

2. Procédé selon la revendication 1, les processus d'adaptation individuels étant en outre démarrés et réalisés en fonction
   d) des relations fonctionnelles des processus d'adaptation entre eux.

3. Procédé selon la revendication 1 ou 2, les conditions environnantes étant la pression atmosphérique environnante et/ou la température environnante et/ou la température de l'air d'aspiration.

4. Procédé selon les revendications 1 à 3, l'état du système du moteur à combustion interne étant décrit par des paramètres de point de fonctionnement du moteur à combustion interne.

5. Procédé selon la revendication 4, les paramètres de point de fonctionnement étant la vitesse de rotation et/ou la charge du moteur à combustion interne.

*Figur 1*

*Figur 2*

**IN DER BESCHREIBUNG AUFGEFÜHRTE DOKUMENTE**

**In der Beschreibung aufgeführte Patentdokumente**

- FR 2901576 A1
- GB 2161960 A
- DE 102004013205 A1

**In der Beschreibung aufgeführte Nicht-Patentliteratur**

- Modellbildung und Regelung eines kooperativen Straßenverkehrs mittels Petrinetzen und Konsens-Algorithmen. **HÜBNER, M.** Dissertation. Technische Universität Braunschweig, 2012